# EUROPEAN PATENT SPECIFICATION

(11) **EP 3 933 240 B1**
(45) Date of publication and mention of the grant of the patent: **22.05.2024**
(21) Application number: 20790438.4
(22) Date of filing: 14.04.2020
(51) Int. Cl.: F16K 31/06, H01F 5/00, H01F 5/04, H01F 7/06

(54) **EXPANSION VALVE COIL ASSEMBLY**
EXPANSIONSVENTILSPULENANORDNUNG
ENSEMBLE BOBINE DE DÉTENDEUR

(30) Priority: 15.04.2019 CN 201920507947 U
(43) Date of publication of application: 05.01.2022
(73) Proprietor: Zhejiang Dunan Artificial Environment Co., Ltd., Shaoxing Zhejiang 311835 (CN)
(72) Inventor: ZHENG, Lifeng, Shaoxing, Zhejiang 311835 (CN); WEI, Bin, Shaoxing, Zhejiang 311835 (CN); ZENG, Qingjun, Shaoxing, Zhejiang 311835 (CN); ZHANG, Jiyou, Shaoxing, Zhejiang 311835 (CN)
(74) Representative: Meyer-Dulheuer MD Legal Patentanwälte PartG mbB
(86) International application number: PCT/CN2020/084661
(87) International publication number: WO 2020/211744

(56) References cited:
- CN-B- 106 151 646
- CN-U- 203 480 975
- CN-U- 204 372 272
- CN-U- 204 372 272
- CN-U- 204 858 797
- CN-U- 209 943 646
- JP-A- 2001 343 085
- JP-U- H0 634 205
- US-A- 5 307 038

## Description

### TECHNICAL FIELD

The present disclosure relates to refrigeration technology, in particular, to an expansion valve coil assembly.

### BACKGROUND

Currently, various solenoid valves are widely used as automatic control components in a refrigeration system, and expansion valve coils and valve bodies work together to switch on and off the refrigerant in the refrigeration system.

In conventional art, if the expansion valve coil is immersed in liquid for a long time, the liquid will permeate into a circuit board in the expansion valve coil, thereby affecting the performance of the expansion valve coil. Chinese patent No. CN203480975U provides an electronic coil, belongs to the technical field of refrigeration, and solves the technical problem that a conventional electronic coil is poor in electric connection reliability; the electronic coil includes a coil body and a wire plugging part arranged at the outer side part of the coil body, wherein lead-out wires are connected onto the wire plugging part; and the wire plugging part includes a coil connecting part and a cover, pins are arranged at the coil connecting part, and the lead-out wires are electrically connected with the pins through a circuit board. The connecting part comprises concave recesses on three of its sidewalls which are filled with solder when the cover is soldered onto the wire plugging part in order to prevent the intrusion of liquid. Chinese patent No. CN106151646B provides a kind of explosion-proof coils, including winding, winding shell, winding shell is equipped with cable mounting portion, wiring board, lead are installed on wiring board, it is provided with sheath outside lead, winding shell is also fixedly connected with housing outside; the top of housing is higher than the bottom end of sheath, and housing, cable mounting portion, wiring board, lead and part sheath encapsulating are integral. Japanese patent No. JPH0634205U provides a waterproof solenoid including at least a movable iron core, a fixed iron core, and a coil, the outer periphery of which is a resin mold portion, wherein a lead wire lead-out portion of the resin mold portion is covered with a rubber boot; a waterproof solenoid is bonded and coupled. United states patent No. US5307038A provides electromagnetic coupling apparatus including an excitation unit constituted by an excitation coil wound around a coil bobbin, a yoke in which said excitation coil is arranged, a resin terminal base casing fixed to a rear surface of said yoke, and a pair of terminals which are fixed in said terminal base casing by insert molding and are respectively connected to turn start and end portions of said excitation coil, wherein a cylindrical opening portion through which turn start and end portions of said excitation coil are extracted is formed on said coil bobbin, a protruding opening portion which is fitted in a through hole formed in said yoke and allows said turn start and end portions to be inserted therein is formed on a bottom portion of said terminal base casing, and said protruding opening portion is forcibly fitted and fixed in said cylindrical opening portion through a rubber bush.

### SUMMARY

In the present disclosure, an expansion valve coil assembly as defined in the respective claims is provided according to embodiments of the present invention, wherein the expansion coil assembly includes a coil unit and a housing.

The coil unit is provided with a mounting platform. The mounting platform is provided, in a partially protruding manner, with a connecting portion. The housing is sleeved on the connecting portion, and fixedly connected to the mounting platform. The connecting portion has a plurality of sidewalls, a concave structure is disposed on each of the plurality of sidewalls of the connecting portion. The plurality of sidewalls of the connecting portion are defined as a first sidewall, a second sidewall, a third sidewall and a fourth sidewall. The first sidewall and the third sidewall are symmetrically disposed. The second sidewall and the fourth sidewall are symmetrically disposed. At least one recess is disposed on each of the first sidewall, the second sidewall, the third sidewall and the fourth sidewall of the connecting portion to form the concave structure. The at least one recess on each of the first sidewall, the second sidewall, the third sidewall and the fourth sidewall is in communication with each other, to form a ring-shaped recess around a circumference of the connecting portion. A sealing material is filled in a space between an inner side of the housing and the sidewalls of the connecting portion including the ring-shaped recess.

Advantages of the expansion valve coil assembly in the present disclosure will be described herein. The coil unit is provided with a mounting platform. The mounting platform is provided, in a partially protruding manner, with a connecting portion. The housing is sleeved on the connecting portion, and connected to the mounting platform. The connecting portion has a plurality of sidewalls, a concave structure is disposed on each of the plurality of sidewalls of the connecting portion. A sealing material is filled in a space between an inner side of the housing and the sidewall of the connecting portion. By disposing the concave structure on each of the plurality of sidewalls of the connecting portion, a sealing area of the sealing material is increased, preventing a liquid from entering or permeating into the coil unit, thereby improving waterproofness of the expansion valve coil assembly.

By arranging a recess on the at least one of the plurality of sidewalls, the liquid can be better insulated, so that the waterproofness of the expansion valve coil assembly can be improved.

By arranging a recess on all of the four sidewalls, the concave-convex structure can be formed on four sidewalls of the connecting portion, so that the sealing area of the sealing material can be increased and the liquid around the expansion valve coil assembly will be harder to permeate into the expansion valve coil assembly from all the directions, thereby effectively improving waterproofness of the expansion valve coil assembly.

In some embodiments, the housing is sleeved on the connecting portion, and fixed to the mounting platform. A protrusion is further disposed on an inner wall of the housing. A sealing material is filled in a space between an inner side of the housing and the sidewall of the connecting portion.

The concave structure is disposed on the sidewalls of the connecting portion and a protrusion is disposed on the inner wall of the housing, preventing a liquid from entering or permeating into the coil unit, so that the liquid is harder to permeate into the coil unit, thereby improving waterproofness of the expansion valve coil assembly.

### BRIEF DESCRIPTION OF THE DRAWINGS

In order to better describe and explain the embodiments and/or examples of those inventions disclosed herein, one or more drawings may be referred to.
FIG. 1a is a front view of an expansion valve coil assembly in an embodiment of the present disclosure.
FIG. 1b is a side view of an expansion valve coil assembly in another embodiment of the present disclosure.
FIG. 2a is an enlarged view of a connecting portion of the expansion valve coil assembly in FIG. 1a.
FIG. 2b is an enlarged view of a connecting portion of the expansion valve coil assembly in FIG. 1b.
FIG. 3 is a schematic diagram of a housing of an expansion valve coil assembly in another embodiment.
FIG. 4a is an enlarged view of a connecting portion of the expansion valve coil assembly of FIG. 1a in another embodiment.
FIG. 4b is an enlarged view of a connecting portion of the expansion valve coil assembly of FIG. 1b in another embodiment.
FIG. 5a is an enlarged view of a connecting portion of the expansion valve coil assembly of FIG. 1a in another embodiment, the embodiment concerned does not form part of the claimed invention.
FIG. 5b is an enlarged view of a connecting portion of the expansion valve coil assembly of FIG. 1b in another embodiment, the embodiment concerned does not form part of the claimed invention.
FIG. 6 is an assembly drawing of an expansion valve coil assembly in another embodiment.
FIG. 7 is a front view of an expansion valve coil assembly in another embodiment in an using state.
FIG. 8 is a side view of an expansion valve coil assembly in an embodiment in an using state.
FIG. 9 is a cross-section view of an expansion valve coil assembly in another embodiment in an using state.

In the drawings, 10 represents a coil unit, 100 represents a connecting portion, 110 represents a mounting platform, 120 represents a connector, 101 represents a first sidewall, 102 represents a second sidewall, 103 represents a third sidewall, 104 represents a fourth sidewall, 1011 represents a first recess, 1012 represents a first protrusion, 1021 represents a second recess, 1022 represents a second protrusion, 1031 represents a third recess, 1032 represents a third protrusion, 1041 represents a fourth recess, 1042 represents a fourth protrusion, 1013 represents a fifth protrusion, 1023 represents a sixth protrusion, 1043 represents a seventh protrusion, 20 represents a housing, 201 represents a bottom, 202 represents a first wall, 203 represents a second wall, 204 represents a third wall, 2021 represents a projection, and 2022 represents a sealing strip.

### DETAILED DESCRIPTION

In order to facilitate the understanding of the present disclosure, and to make the above-mentioned objectives, features, and advantages of the present disclosure more obvious and understandable, the specific embodiments of the present disclosure will be described in detail below with reference to the accompanying drawings. In the following description, many specific details are set forth in order to fully understand the disclosure, and the preferred embodiments of the disclosure are shown in the accompanying drawings.

In addition, terms "first" and "second" are only used for descriptive purposes, and cannot be understood as indicating or implying relative importance or implicitly indicating the number of indicated technical features. Therefore, the features defined with "first" and "second" may explicitly or implicitly include at least one of the features. In the description of the present disclosure, "a plurality of" means at least two, such as two, three, etc., unless specifically defined otherwise. In the description of the present disclosure, "several" means at least one, such as one, two, etc., unless otherwise specifically defined.

An expansion valve coil assembly in the present disclosure will be described in details hereinafter.

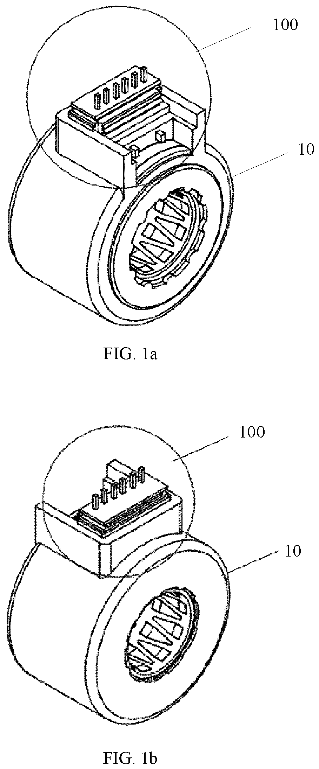

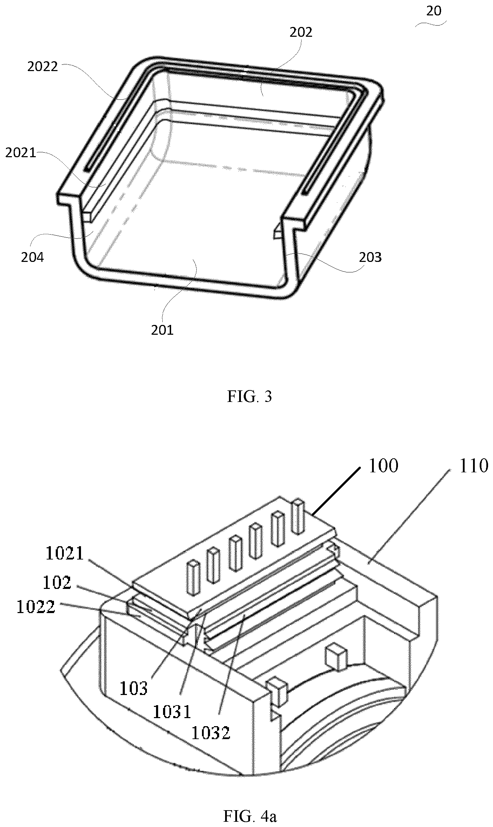

FIG. 1a and FIG. 1b are structural schematic diagrams of an expansion valve coil assembly in an embodiment. Referring to FIG. 1a, FIG. 1b and FIG. 3, the expansion valve coil assembly includes a coil unit 10 and a housing 20.

The coil unit 10 is provided with a mounting platform 110. The mounting platform 110 can be provided, in a partially protruding manner, with a connecting portion 100. The housing 20 is sleeved on the connecting portion 100, and fixed to the mounting platform 110. The connecting portion 100 has a plurality of sidewalls, a concave structure is disposed on one of the plurality of sidewalls of the connecting portion 100. A sealing material is filled in a space between an inner side of the housing 20 and the sidewall of the connecting portion 100.

The coil unit 10 can include a winding member and a leading wire member. The winding member can include a stator polar plate, a stator housing, a framework and an enameled wire winding on the skeleton. A leading-out end of the enameled wire can be connected with a contact pin. The winding member can be enclosed by a layer of resin via a process of injection molding, forming a packaging layer. A connecting portion 100 can be arranged on the coil unit 10, and the leading wire member can be connected with the winding member via the connecting portion 100. In details, the leading wire member can include a leading wire and a circuit board connecting with an end of the leading wire. An end of the contact pin can permeate through a hole preset on the circuit board, and can be connected with the connecting portion 100 by a process of tin soldering. The connecting portion 100 and the coil unit 10 can be an integrated structure. During manufacturing of the expansion valve coil assembly in plants, the coil unit 10 and the connecting portion 100 can be integrally produced, so that stability of the expansion valve coil can be improved.

The housing 20 is sleeved on the connecting portion 100, and fixedly connected to the mounting platform 110. In details, the housing 20 is covered around the external side of the circuit board, and be welded together with the mounting platform 110 by a process of ultrasonic welding, so that the housing 20 and the mounting platform 110 can be combined together to form an integral structure by welding. The housing 20 can be an insulation housing 20. By fixedly connecting the housing 20 to the mounting platform 110, the leading wire member in the coil can be better sealed.

The concave structure is disposed on each of the plurality of sidewalls of the connecting portion 100, the advantages of which will be described herein. Compared with a sidewall having a flat surface, the concave structure disposed on the sidewall can have much more surfaces on the sidewall. When the sealing material is filled in the space between the housing 20 and the connecting portion 100, a contact surface between the sealing material and the sidewall can be larger, thereby facilitating sealing and insulation of the leading wire member inside the coil unit 10. The sealing material can be epoxy resin or other insulating materials, and the specific material will not be limited in the present embodiment.

The concave structure disposed on the sidewalls of the connecting portion 100 can be a step-shaped structure, a ripple-shaped structure or the like. Types of the concave structure and depth of the concave structure are not limited in the present embodiment, as long as a contact surface between the housing 20 and the connecting portion 100 can be increased. When the expansion valve coil assembly is disposed in a liquid, the liquid can permeate into the coil unit 10 from a junction between the housing 20 and the connecting portion 100, and gradually permeate to the leading wire member inside the coil unit 10 via the sealing material between the housing 20 and the connecting portion 100. In the present embodiment, by filling the sealing material in the space between the housing 20 and the connecting portion 100, flowing of the liquid is prevented in some degree, thereby reducing a permeating velocity of the liquid an improving waterproofness of the expansion valve coil. Moreover, by disposing the concave structure on the sidewalls of the connecting portion 100, a sealing area of the sealing material can be improved, so that the liquid can be harder to permeate into the coil unit 10, thereby further improving the waterproofness of the expansion valve coil.

The expansion valve coil assembly includes a coil unit 10 and a housing 20. The coil unit 10 is provided with a mounting platform 110. The mounting platform 110 is provided, in a partially protruding manner, with a connecting portion 100. The housing 20 is sleeved on the connecting portion 100, and fixedly connected to the mounting platform 110. The connecting portion 100 has a plurality of sidewalls, and a concave structure is disposed on the plurality of sidewalls of the connecting portion. A sealing material is filled in a space between an inner wall of the housing 20 and the sidewall of the connecting portion 100. By disposing the concave structure on the plurality of sidewalls of the connecting portion, the sealing area of the sealing material can be increased and a distance for a liquid entering the coil unit 10 can be extended, so that the liquid can be harder to permeate into the coil unit 10, thereby improving waterproofness of the expansion valve coil assembly.

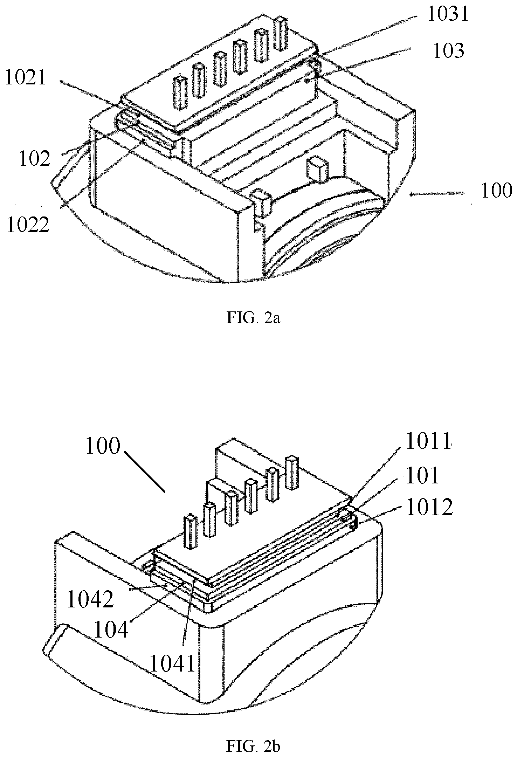

According to the invention, referring to FIG. 2a, FIG. 2b and FIG. 3, the connecting portion 100 includes a first sidewall 101, a second sidewall 102, a third sidewall 103 and a fourth sidewall 104; and a concave structure is disposed on each of the plurality of sidewalls of the connecting portion 100. In details, the first sidewall 101 and the third sidewall 103 is symmetrically disposed, the second sidewall 102 and the fourth sidewall 104 is symmetrically disposed. Referring to FIG. 3, the housing 20 can be a half-surrounded structure, that is, the housing 20 can include a bottom 201, a first wall 202, a second wall 203 and a third wall 204. The bottom 201 of the housing 20 and the connecting portion 100 can be symmetrically disposed, the first wall 202 of the housing 202 can be connected with the first sidewall 101 of the connecting portion 100, the second wall 203 of the housing 20 can be connected against the second sidewall 102 of the connecting portion 100, and the third wall 204 of the housing 20 can be connected with the fourth sidewall 104 of the connecting portion 100. A position corresponding to the third sidewall 103 of the connecting portion 100 can be not covered by the housing 20, and the sealing material can be filled from a position at the third sidewall 103 of the connecting portion 100, so as to seal the leading wire member in the coil unit 10.

According to the invention, all of the plurality of sidewalls of the connecting portion 100 are provided with a recess. Since all of the four sidewalls of the connecting portion 100 are provided with the recess, the recess on each of the sidewalls communicates with each other, forming a ring-shaped recess around a circumference of the connecting portion 100, so as to better isolate the liquid, thereby improving the waterproofness of the expansion valve coil assembly.

In some embodiments, a cross section along a direction perpendicular to corresponding sidewall of the recess is polygon-shaped, such as at least one of triangle-shaped or rectangle-shaped, or other irregular shapes. For example, all of the recesses on each of the plurality of sidewalls of the connecting portion 100 can be rectangle-shaped, so as to facilitate production; alternatively, the recess on the first sidewall 101 of the connecting portion 100 can be in triangle-shaped, and the recess on the second sidewall 102 of the connecting portion 100 can be in rectangle-shaped. It should be understood that the recess on each of the plurality of sidewalls of the connecting portion 100 can be in any shape, which is not limited in the present embodiment.

According to the invention, referring to FIG. 2a and FIG. 2b, at least one recess is arranged on all of the first sidewall 101, the second sidewall 102, the third sidewall 103 and the fourth sidewall 104.

All of the four sidewalls of the connecting portion 100 may be provided with a plurality of recesses, and the cross sections along the direction perpendicular to corresponding sidewall of the recesses arranged on different sidewalls can be the same, or not the same. In addition, cross sections along the direction perpendicular to corresponding sidewall of the recess arranged on the same sidewall can be different. For example, three recesses can be disposed on the first sidewall 101, and cross sections along a direction perpendicular to the first sidewall 101 of the three recesses can be in triangle-shaped, rectangle-shaped and round/quasi-circular-shaped, respectively.

In the present invention, recesses are disposed on all of the four sidewalls of the connecting portion 100, wherein, a first recess 1011 is disposed on the first sidewall 101, a second recess 1021 is disposed on the second sidewall 102, a third recess 1031 is disposed on the third sidewall 103, and a fourth recess 1041 is disposed on the fourth sidewall 104. Cross sections along directions perpendicular to the corresponding sidewalls of the first recess 1011, the second recess 1021, the third recess 1031 and the fourth recess 1041 can be in rectangle-shaped, forming a ring-shaped recess along the circumference of the connecting portion 100. By disposing the recesses on all of the four sidewalls of the connecting portion 100, the concave structure can be formed on surfaces of all the four sidewalls of the connecting portion 100, so as to improve the sealing area of the sealing material and prevent the liquid from permeating into the expansion valve coil assembly around, thereby effectively improving waterproofness of the expansion valve coil assembly.

In addition, a depth and a width of the recess can be adaptively adjusted by one of ordinary skill in the art according to design details and needs. For example, the depth of the recess can be adjusted at different positions of the recess.

In some embodiments, the depths of the plurality of recesses arranged on the same sidewall can be the same; alternatively, the depths of the plurality of recesses arranged on the same sidewall can reduce in a gradient; and, alternatively, the depths of the plurality of recess arranged on the same sidewall can increase in a gradient, so as to prevent the liquid from converging at the coil unit 10 and achieve better insolation performance. In the present embodiment, the plurality of recesses arranged on the same sidewall can have the same depth.

In some embodiments, referring to FIG. 2a and FIG. 2b, the first sidewall 101, the second sidewall 102, and the fourth sidewall 104 can further include a protrusion. Wherein, a first protrusion 1012 can be disposed on the first sidewall 101, a second protrusion 1022 can be disposed on the second sidewall 102, and a fourth protrusion 1042 can be disposed on the fourth sidewall 104.

The protrusion and the connecting portion 100 can be an integral structure; alternatively, the protrusion can be independently disposed, and connected with the sidewall of the connecting portion 100. When the protrusion is independently disposed, a material of the protrusion can be the same as that of the connecting portion 100, or can be different with that of the connecting portion 100. The protrusion and the recess can be disposed at intervals, so as to further increase the sealing area of the sealing material, thereby preventing the liquid from entering or permeating into the unit coil 10 and improving waterproofness of the expansion valve coil assembly.

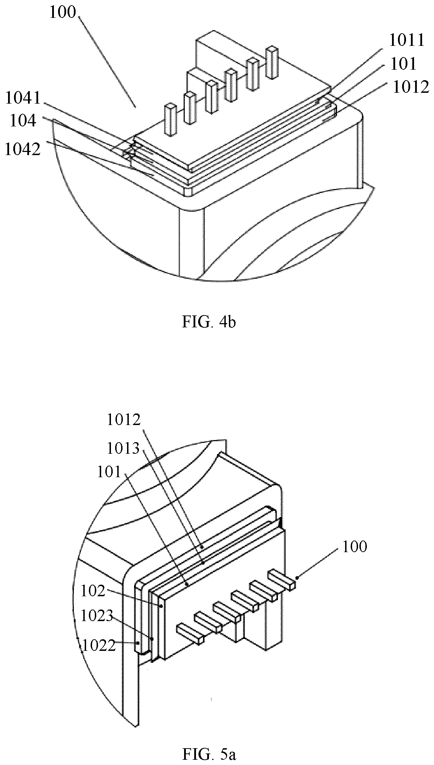

In some embodiments, referring to FIG. 4a and FIG. 4b, a third protrusion 1032 can be disposed on the third sidewall 103 of the connecting portion 100, i.e., all of the four sidewalls of the connecting portion 100 can be provided with the recess and the protrusions, wherein the recesses and the protrusions can be disposed at intervals. In the present embodiment, the recesses and the protrusions can be disposed on all of the four sidewalls of the connecting portion 100, and degree of concave and convex can be enlarged by alternately disposing the recesses and the protrusions. Therefore, combination area between the housing 20 and each of the four sidewalls of the connecting portion 100 can be further increased, so that it is harder for the liquid around to permeate into the expansion valve coil assembly, thereby effectively improving waterproofness of the expansion valve coil assembly.

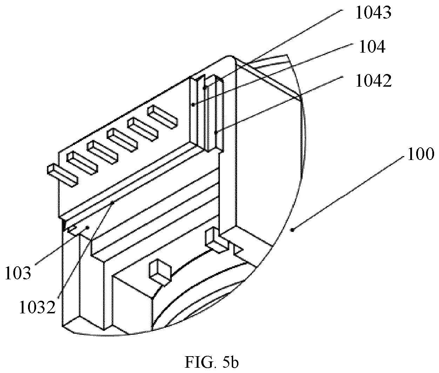

The following embodiment concerned does not form part of the claimed invention, in which a protrusion can be arranged on at least one of the plurality of sidewalls of the connecting portion 100, so as to form the concave-convex structure on at least one surface of the plurality of sidewalls of the connecting portion. Referring to FIG. 5a and FIG. 5b, at least one protrusion can be arranged on all of the first sidewall 101, the second sidewall 102, the third sidewall 103 and the fourth sidewall 104. Wherein, a first protrusion 1012 can be disposed on the first sidewall 101, a second protrusion 1022 can be disposed on the second sidewall 102, a third protrusion 1032 can be disposed on the third sidewall 103, and a fourth protrusion 1042 can be disposed on the fourth sidewall 104.

The following embodiment concerned does not form part of the claimed invention, arranging the protrusions on all of the four sidewalls of the connecting portion 100 can increase the sealing area of the sealing material to a larger degree, so that the liquid around can be harder to permeate into the expansion valve coil assembly, thereby effectively improving waterproofness of the expansion valve coil assembly.

The following embodiment concerned does not form part of the claimed invention, in which a cross section perpendicular to the corresponding sidewall of the protrusion can be polygon-shaped, such as at least one of triangle-shaped and rectangle-shaped, or other irregular-shaped. In addition, a depth and a width of the protrusion can be adaptively adjusted by one of ordinary skill in the art according to design details and needs. A plurality of protrusions can be arranged on all of the four sidewalls of the connecting portion 100, and cross sections of protrusions arranged on different sidewalls can be at least one of triangle-shaped and rectangle-shaped. Alternatively, cross sections of the plurality of protrusions arranged on the same sidewall can be different. For example, three protrusions can be arranged on the first sidewall 101, and the cross sections of the three protrusions can be in triangle-shaped, rectangle-shaped and cylinder-shaped, respectively.

The following embodiment concerned does not form part of the claimed invention, in which two protrusions can be arranged on all of a first sidewall 101, a second sidewall 102 and a fourth sidewall 104, wherein a first protrusion 1012 and a fifth protrusion 1013 can be arranged on the first sidewall 101, a second protrusion 1022 and a sixth protrusion 1023 can be arranged on the second sidewall 102, a fourth protrusion 1042 and a seventh protrusion 1043 can be arranged on the fourth sidewall 104, and a third protrusion 1032 can be arranged on the third sidewall 103. A shape of the first protrusion 1012, a shape of the second protrusion 1022 and a shape of the fourth protrusion 1042 can be the same, and a thickness of the first protrusion 1012, a thickness of the second protrusion 1022 and a thickness of the fourth protrusion 1042 can be the same. A shape of the third protrusion 1032, a shape of the fifth protrusion 1013, a shape of the sixth protrusion 1023 and a shape of the seventh protrusion 1043 can be the same, and a thickness of the third protrusion 1032, a thickness of the fifth protrusion 1013, a thickness of the sixth protrusion 1023 and a thickness of the seventh protrusion 1043 can be the same.

The following embodiment concerned does not form part of the claimed invention, by arranging protrusions on all of the four sidewalls of the connecting portion 100, the concave structures can be formed on the surfaces of the four sidewalls of the connecting portion 100, so as to increase the sealing area of the sealing material, so that the liquid around can be harder to permeate into the expansion valve coil assembly, thereby effectively improving waterproofness of the expansion valve coil assembly.

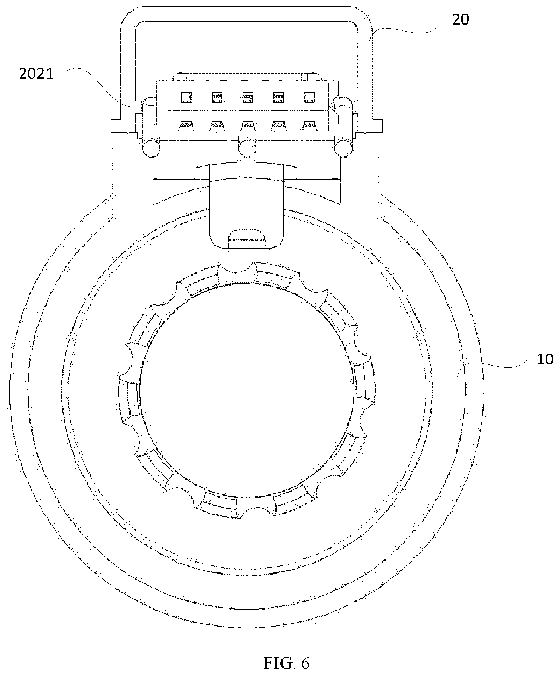

In some embodiments, referring to FIG. 3 and FIG. 6, another expansion valve coil assembly can be disclosed. The expansion valve coil assembly includes a coil unit 10 and a housing 20. The coil unit 10 is provided with a mounting platform 110. The mounting platform 110 is provided, in a partially protruding manner, with a connecting portion 100. The housing 20 is sleeved on the connecting portion 100, and fixed to the mounting platform 110. A sidewall of the connecting portion includes a concave structure, and an inner side of the housing can include a protrusion. A sealing material is filled in a space between an inner side of the housing 20 and the sidewall of the connecting portion 100.

In some embodiments, the concave structure can be independently arranged on the sidewalls of the connecting portion 100. The connecting portion 100 includes a first sidewall 101, a second sidewall 102, a third sidewall 103 and a fourth sidewall 104. In details, the first sidewall 101 and the third sidewall 103 are symmetrically disposed; and the second sidewall 102 and the fourth sidewall 104 are symmetrically disposed. The housing 20 can be a half-surrounded structure including a bottom 201, a first wall 202, a second wall 203 and a third wall 204. The housing 20 can be sleeved on the connecting portion 100, the first wall 202 of the housing 20 can abut against the first sidewall 101 of the connecting portion 100; the second wall 203 of the housing 20 can abut against the second sidewall 102 of the connecting portion 100; and the third wall 204 of the housing 20 can abut against the fourth sidewall 104 of the connecting portion 100. The protrusion can be arranged on at least one of the first wall 202, the second wall 203 and the third wall 204. In details, the protrusion can be arranged on all of the first wall 202, the second wall 203, and the third wall 204 of the housing 20 abutting against the connecting portion 100. The protrusion can include a step-shaped structure or a ripple-shaped structure. In some embodiments, a projection 2021 can be arranged on the first wall 202, the second wall 203 and the third wall 204. A sealing strip can be further arranged on the first wall 202, the second wall 203 and the third wall 204. The sealing strip 2022 can be configured for improving sealing performance between the housing 20 and the connecting portion 100 when the housing 20 is sleeved on the connecting portion 100, i.e., improving waterproofness. In embodiments of the invention, the concave structure is disposed on the first sidewall 101, the second sidewall 102, the third sidewall 103 and the fourth sidewall 104 of the connecting portion 100. In details, the concave structure includes the recess.

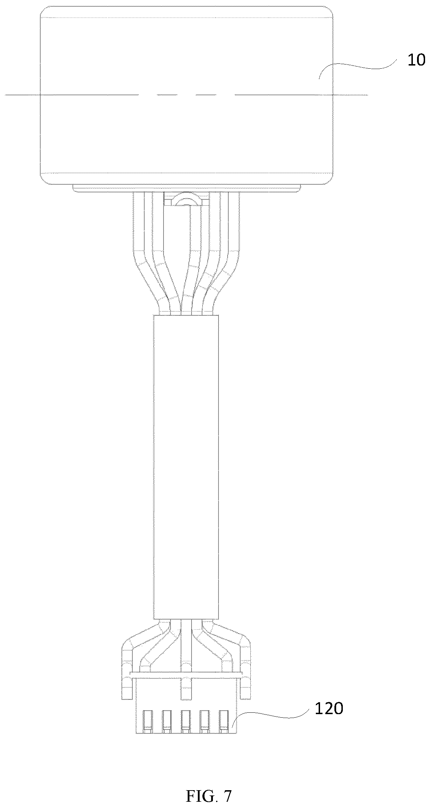

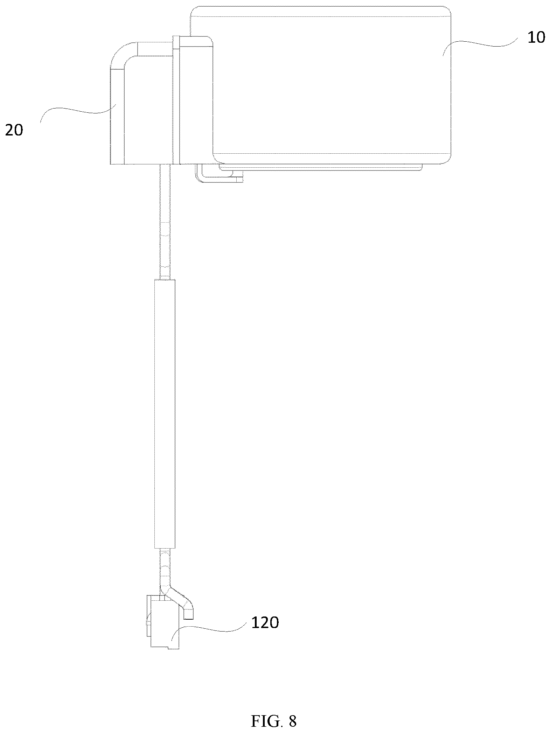

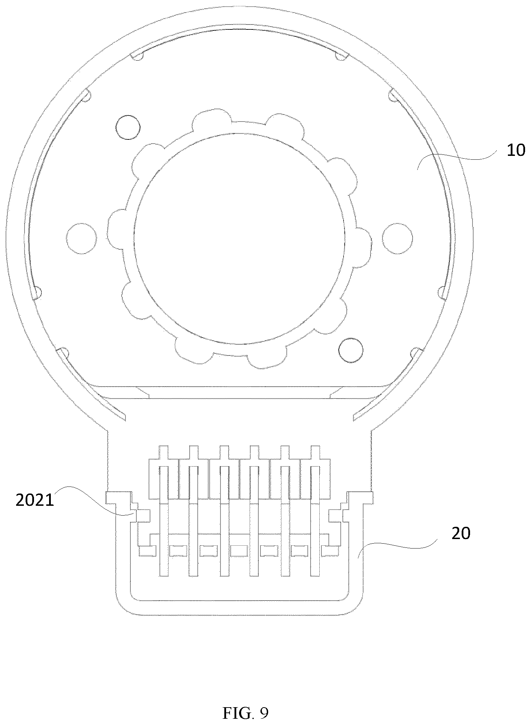

In some embodiments, referring to FIG. 7 to FIG. 9, a contact pin of the coil unit 10 can penetrate through a hole preset on the circuit board and be connected with the circuit board. The circuit board can be connected with a connector 120 via the leading wire, and connected with an external device via the connector 120.

The technical features of the above-described embodiments may be combined in any combination. For the sake of brevity of description, all possible combinations of the technical features in the above embodiments are not described. However, as long as there is no contradiction between the combinations of these technical features, all should be considered as within the scope of this disclosure. The present invention is defined and limited only by the appended claims.

## Claims

1. An expansion valve coil assembly, comprising,
a coil unit (10) and a housing (20),
wherein the coil unit (10) is provided with a mounting platform (110);
the mounting platform (110) is provided, in a partially protruding manner, with a connecting portion (100);
the housing (20) is sleeved on the connecting portion (100), and fixedly connected to the mounting platform (110);
the connecting portion (100) has a plurality of sidewalls, a concave structure is disposed on each of the plurality of sidewalls of the connecting portion (100),
the plurality of sidewalls of the connecting portion (100) are defined as a first sidewall (101), a second sidewall (102), a third sidewall (103) and a fourth sidewall (104),
the first sidewall (101) and the third sidewall (103) are symmetrically disposed, the second sidewall (102) and the fourth sidewall (104) are symmetrically disposed,
at least one recess (1011, 1021, 1031, 1041) is disposed on each of the first sidewall (101), the second sidewall (102), the third sidewall (103) and the fourth sidewall (104) of the connecting portion (100) to form the concave structure, the at least one recess on each of the first sidewall (101), the second sidewall (102), the third sidewall (103) and the fourth sidewall (104) is in communication with each other rdter, to form a ring-shaped recess around a circumference of the connecting portion (100); and
a sealing material is filled in a space between an inner side of the housing (20) and the plurality of sidewalls of the connecting portion (100) including the ring-shaped recess.

2. The expansion valve coil assembly of claim 1, wherein,
the housing (20) and the mounting platform (110) are combined together to form an integral structure by welding.

3. The expansion valve coil assembly of claim 1, wherein,
a cross section along a direction perpendicular to a corresponding sidewall of the
recess is polygon-shaped.

4. The expansion valve coil assembly of claim 1, wherein, each of the first sidewall (101), the second sidewall (102), and the fourth sidewall (104) comprises a protrusion (1012, 1022, 1042).

5. The expansion valve coil assembly of claim 4, wherein,
a protrusion (1032) is disposed on the third sidewall (103),
and a cross section of the protrusion is polygon-shaped.

6. The expansion valve coil assembly of claim 1, wherein,
a protrusion (1012, 1022, 1032, 1042) is disposed on at least one sidewall (101, 102, 103, 104) of the connecting portion (100).

7. The expansion valve coil assembly of claim 6, wherein, at least one protrusion (1012, 1022, 1032, 1042) is disposed on each of the first sidewall (101), the second sidewall (102), the third sidewall (103) and the fourth sidewall (104) of the connecting portion (100).

8. The expansion valve coil assembly of claim 1, wherein
an inner side of the housing (20) has a protrusion.

9. The expansion valve coil assembly of claim 8, wherein,
the housing (20) is a half-surrounded structure comprising a bottom (201), a first wall (202), a second wall (203) and a third wall (204);
the first wall (202) abuts against the first sidewall (101);
the second wall (203) abuts against the second sidewall (102); and
the third wall (204) abuts against the fourth sidewall (104).

10. The expansion valve coil assembly of claim 9, wherein,
the protrusion is arranged on at least one of the first wall (202), the second wall (203) and the third wall (204).

11. The expansion valve coil assembly of claim 8, wherein,
the protrusion comprises a step-shaped structure or a ripple-shaped structure.

## Patentansprüche

1. Expansionsventilspulenbaugruppe, umfassend:
eine Spuleneinheit (10) und ein Gehäuse (20),
wobei die Spuleneinheit (10) mit einer Montageplatteform (110) versehen ist; wobei die Montageplatteform (110) mit einem teilweise vorspringenden Verbindungsabschnitt (100) versehen ist;
wobei das Gehäuse (20) auf den Verbindungsabschnitt (100) aufgesetzt und fest mit der Montageplatteform (110) verbunden ist;
wobei der Verbindungsabschnitt (100) eine Vielzahl von Seitenwänden aufweist und eine konkave Struktur an jeder der Vielzahl von Seitenwänden des Verbindungsabschnitts (100) angeordnet ist,
wobei die Vielzahl von Seitenwänden des Verbindungsabschnitts (100) als eine erste Seitenwand (101), eine zweite Seitenwand (102), eine dritte Seitenwand (103) und eine vierte Seitenwand (104) definiert sind,
wobei die erste Seitenwand (101) und die dritte Seitenwand (103) symmetrisch angeordnet sind,
wobei die zweite Seitenwand (102) und die vierte Seitenwand (104) symmetrisch angeordnet sind,
wobei wenigstens eine Ausnehmung (1011, 1021, 1031, 1041) an jeder von der ersten Seitenwand (101), der zweiten Seitenwand (102), der dritten Seitenwand (103) und der vierten Seitenwand (104) des Verbindungsabschnitts (100) angeordnet ist, um die konkave Struktur zu bilden, wobei die wenigstens eine Ausnehmung an der ersten Seitenwand (101), der zweiten Seitenwand (102), der dritten Seitenwand (103) und der vierten Seitenwand (104) miteinander in Verbindung steht, um eine ringförmige Vertiefung um einen Umfang des Verbindungsabschnitts (100) zu bilden; und
wobei ein Dichtungsmaterial in einen Raum zwischen einer Innenseite des Gehäuses (20) und der Vielzahl von Seitenwänden des Verbindungsabschnitts (100) mit der ringförmigen Ausnehmung gefüllt ist.

2. Expansionsventilspulenbaugruppe nach Anspruch 1, wobei
das Gehäuse (20) und die Montageplattform (110) durch Schweißen kombiniert sind, um eine einstückig zu bilden.

3. Expansionsventilspulenbaugruppe nach Anspruch 1, wobei
ein Querschnitt in einer Richtung senkrecht zu einer entsprechenden Seitenwand der Ausnehmung polygonal geformt ist.

4. Expansionsventilspulenbaugruppe nach Anspruch 1, wobei
die erste Seitenwand (101), die zweite Seitenwand (102) und die vierte Seitenwand (104) jeweils einen Vorsprung (1012, 1022, 1042) umfassen.

5. Expansionsventilspulenbaugruppe nach Anspruch 4, wobei
ein Vorsprung (1032) an der dritten Seitenwand (103) angeordnet ist und ein Querschnitt des Vorsprungs polygonal geformt ist.

6. Expansionsventilspulenbaugruppe nach Anspruch 1, wobei ein Vorsprung (1012, 1022, 1032, 1042) an wenigstens einer Seitenwand (101, 102, 103, 104) des Verbindungsabschnitts (100) angeordnet ist.

7. Expansionsventilspulenbaugruppe nach Anspruch 6, wobei
wenigstens ein Vorsprung (1012, 1022, 1032, 1042) an jeder von der ersten Seitenwand (101), der zweiten Seitenwand (102), der dritten Seitenwand (103) und der vierten Seitenwand (104) des Verbindungsabschnitts (100) angeordnet ist.

8. Expansionsventilspulenbaugruppe nach Anspruch 1, wobei eine Innenseite des Gehäuses (20) einen Vorsprung aufweist.

9. Expansionsventilspulenbaugruppe nach Anspruch 8, wobei
das Gehäuse (20) eine halb umschlossene Struktur ist, die einen Boden (201), eine erste Wand (202), eine zweite Wand (203) und eine dritte Wand (204) umfasst;
die erste Wand (202) an der ersten Seitenwand (101) anliegt;
die zweite Wand (203) an der zweiten Seitenwand (102) anliegt; und
die dritte Wand (204) an der dritten Seitenwand (104) anliegt.

10. Expansionsventilspulenbaugruppe nach Anspruch 9, wobei der Vorsprung an wenigstens einer von der ersten Wand (202), der zweiten Wand (203) und der dritten Wand (204) angeordnet ist.

11. Expansionsventilspulenbaugruppe nach Anspruch 8, wobei
der Vorsprung eine stufenförmige Struktur oder eine riffelförmige Struktur umfasst.

## Revendications

1. Un ensemble de bobine à soupape de détente, comprenant,
une unité de bobine (10) et un logement (20),
dans lequel l'unité de bobine (10) est munie d'une plateforme de montage (110) ;
la plateforme de montage (110) est munie, de façon partiellement saillante, d'une partie de raccordement (100) ;
le logement (20) est emmanché sur la partie de raccordement (100), et raccordé fixement à la plateforme de montage (110) ;
la partie de raccordement (100) est dotée d'une pluralité de parois latérales, une structure concave est agencée sur chacune de la pluralité des parois latérales de la partie de raccordement (100),
la pluralité des parois latérales de la partie de raccordement (100) est définie comme première paroi latérale (101), deuxième paroi latérale (102), troisième paroi latérale (103) et quatrième paroi latérale (104),
la première paroi latérale (101) et la troisième paroi latérale (103) sont agencées symétriquement,
la deuxième paroi latérale (102) et la quatrième paroi latérale (104) sont agencées symétriquement,
au moins un renfoncement (1011, 1021, 1031, 1041) est agencé sur chaque première paroi latérale (101), deuxième paroi latérale (102), troisième paroi latérale (103) et quatrième paroi latérale (104) de la partie de raccordement (100) pour former la structure concave, les au moins un renfoncement sur chaque première paroi latérale (101), deuxième paroi latérale (102), troisième paroi latérale (103) et quatrième paroi latérale (104) communiquent mutuellement pour former un renfoncement annulaire autour de la circonférence de la partie de raccordement (100) ; et
un matériau de scellement remplit l'espace entre un côté interne du logement (20) et la pluralité des parois latérales de la partie de raccordement (100) incluant le renfoncement annulaire.

2. Un ensemble de bobine à soupape de détente selon la revendication 1, dans lequel,
le logement (20) et la plateforme de montage (110) sont combinés pour former une structure intègre par soudage.

3. Un ensemble de bobine à soupape de détente selon la revendication 1, dans lequel,
la section en coupe dans le sens perpendiculaire à la paroi latérale correspondante du renfoncement est en forme de polygone.

4. Un ensemble de bobine à soupape de détente selon la revendication 1, dans lequel,
chaque première paroi latérale (101), deuxième paroi latérale (102), et quatrième paroi latérale (104) comprend une saillie (1012, 1022, 1042).

5. Un ensemble de bobine à soupape de détente selon la revendication 4, dans lequel,
une saillie (1032) est agencée sur la troisième paroi latérale (103), et la section en coupe de la saillie est en forme de polygone.

6. Un ensemble de bobine à soupape de détente selon la revendication 1, dans lequel,
une saillie (1012, 1022, 1032, 1042) est agencée sur au moins une paroi latérale (101, 102, 103, 104) de la partie de raccordement (100).

7. Un ensemble de bobine à soupape de détente selon la revendication 6, dans lequel,
au moins une saillie (1012, 1022, 1032, 1042) est agencée sur chaque première paroi latérale (101), deuxième paroi latérale (102), troisième paroi latérale (103) et quatrième paroi latérale (104) de la partie de raccordement (100).

8. Un ensemble de bobine à soupape de détente selon la revendication 1, dans lequel
un côté interne du logement (20) est doté d'une saillie.

9. Un ensemble de bobine à soupape de détente selon la revendication 8, dans lequel,
le logement (20) est une structure à demi entourée comprenant un fond (201), une première paroi (202), une deuxième paroi (203) et une troisième paroi (204) ;
la première paroi (202) vient en butée contre la première paroi latérale (101) ;
la deuxième paroi (203) vient en butée contre la deuxième paroi latérale (102) ; et
la troisième paroi (204) vient en butée contre la quatrième paroi latérale (104).

10. Un ensemble de bobine à soupape de détente selon la revendication 9, dans lequel,
la saillie est agencée sur au moins une paroi parmi la première paroi (202), la deuxième paroi (203) et la troisième paroi (204).

11. Un ensemble de bobine à soupape de détente selon la revendication 8, dans lequel,
la saillie comprend une structure étagée ou une structure ondulée.
